# EUROPEAN PATENT SPECIFICATION

(11) **EP 4 501 980 B1**
(45) Date of publication and mention of the grant of the patent: **09.09.2026**
(21) Application number: 23779647.9
(22) Date of filing: 15.03.2023
(51) Int. Cl.: C08F 214/26, C08F 2/18, C08F 210/02

(54) **METHOD FOR PRODUCING FLUORINE-CONTAINING COPOLYMER**
VERFAHREN ZUR HERSTELLUNG EINES FLUORHALTIGEN COPOLYMERS
PROCÉDÉ DE PRODUCTION D'UN COPOLYMÈRE CONTENANT DU FLUOR

(30) Priority: 31.03.2022 JP 2022061017
(43) Date of publication of application: 05.02.2025
(73) Proprietor: AGC INC., Chiyoda-ku Tokyo 100-8405 (JP)
(72) Inventor: ORITO, Yuki, Tokyo 100-8405 (JP); WATANUKI, Shun, Tokyo 100-8405 (JP)
(74) Representative: Müller-Boré & Partner Patentanwälte PartG mbB
(86) International application number: PCT/JP2023/010197
(87) International publication number: WO 2023/189629

(56) References cited:
- EP-A1- 0 747 404
- EP-A1- 3 708 597
- WO-A1-2014/208592
- WO-A1-2022/149531
- JP-A- H08 311 128
- JP-A- H08 333 408
- JP-A- H11 128 711
- US-A- 3 449 305

## Description

### Technical Field

The present disclosure relates to a method of producing a fluorine-containing copolymer.

### Background Art

In recent years, fluorine-based polymers have been polymer materials excellent in heat resistance, solvent resistance, chemical resistance, and the like, and have been therefore utilized in various applications by taking advantage of such features.

Known examples of methods of producing fluorine-based polymers include polymerization methods such as solution polymerization methods, suspension polymerization methods, and emulsification polymerization methods.

For example, Patent Literature 1 describes a production method including adding a fluorine-containing surfactant as a dispersion stabilizer in the case of producing a fluorine-containing copolymer by suspension polymerization using a polymerization medium containing water and a solvent selected from a perfluorocarbon, a hydrofluorocarbon, or a perfluorocarbon containing a hetero atom. Patent Literature 2 discloses the copolymerisation of tetrafluoroethylene and ethylene in aqueous suspension in the presence of a fluorinated solvent.

### Citation List

### Patent Literature

Patent Literature 1: Japanese Patent Application Laid-Open (JP-A) No. H08-33 3408
Patent Literature 2: EP 3708597 A1

### SUMMARY OF INVENTION

### Technical Problem

However, a polymerization rate is low in the production method described in Patent Literature 1. A method of more efficiently obtaining a fluorine-containing copolymer is desired.

In accordance with an embodiment of the present invention, a method of producing a fluorine-containing copolymer of which the polymerization rate is higher than those of conventional fluorine-containing copolymers is provided.

### Solution to Problem

The present disclosure includes the following aspects.
<1> A method of producing a fluorine-containing copolymer, the method including performing suspension polymerization by using monomers including ethylene and tetrafluoroethylene in a polymerization medium including water and a polymerization solvent A that is not compatible with water and that is at least one kind selected from a group consisting of compounds represented by the following Formulae 1 to 3, wherein a proportion of water to the polymerization medium is from 10% by volume to 80% by volume, 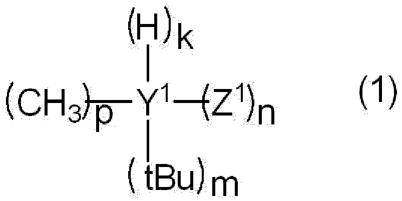 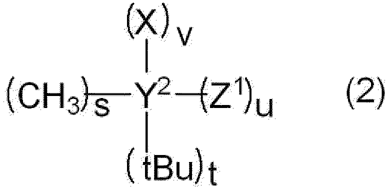 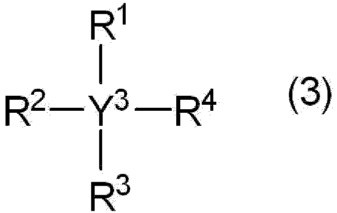
   wherein in Formula 1, Y¹ represents a nitrogen atom or an oxygen atom,
   in a case in which Y¹ is a nitrogen atom, each of p, m, n, and k is independently an integer satisfying p + m ≥ 1 and p + m + n + k = 3,
   in a case in which Y¹ is an oxygen atom, k is 0, each of p, m, n, and k is independently an integer satisfying p + m ≥ 1 and p + m + n = 2,
   in a case in which p is 1 or more, n is 1 or more,
   in Formula 2, Y² represents a carbon atom, a silicon atom, a phosphorus atom, or a sulfur atom,
   in a case in which Y² is a carbon atom or a silicon atom, each of s, t, u, and v is independently an integer satisfying s + t ≥ 1 and s + t + u + v = 4,
   in a case in which Y² is a phosphorus atom, each of s, t, u, and v is independently an integer satisfying s + t ≥ 1 and s + t + u + v = 3,
   in a case in which Y² is a sulfur atom, each of s, t, u, and v is independently an integer satisfying s + t ≥ 1 and s + t + u + v = 2,
   in a case in which s is 1 or more, u is 1 or more,
   each X independently represents a chlorine atom or a bromine atom,
   in Formulae 1 and 2, each Z¹ is independently a group represented by any one of the following Formulae T1 to T6,
   in Formula 3, Y³ represents a carbon atom or a silicon atom, and
   each of R¹ to R⁴ independently represents a methyl group, a tert-butyl group, or a tert-butoxy group, 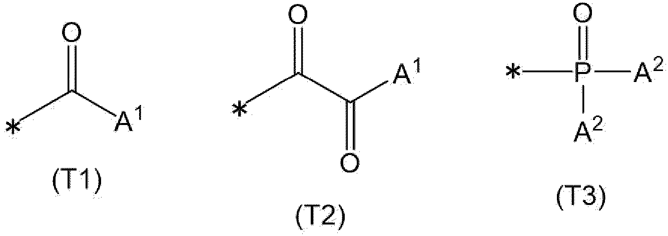 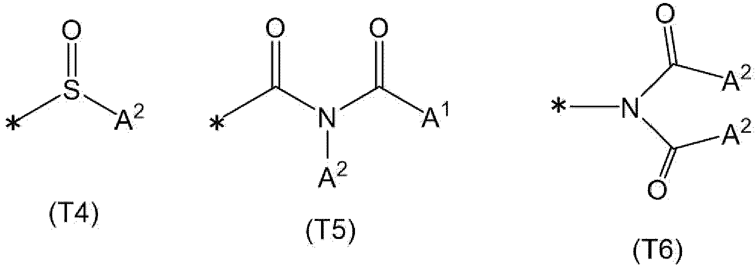
   wherein in Formulae T1 to T6, each A¹ independently represents a hydrogen atom, a methyl group, a tert-butyl group, -OR, or -NR₂, each A² independently represents a methyl group, a tert-butyl group, -OR, or -NR₂, each R independently represents a methyl group or a tert-butyl group, and * represents a binding site.
<2> The method of producing a fluorine-containing copolymer according to <1>, wherein in Formula 2, Y² represents a carbon atom, a silicon atom, or a sulfur atom.
<3> The method of producing a fluorine-containing copolymer according to <1>, wherein in Formula 2, Y² represents a carbon atom or a silicon atom.
<4> The method of producing a fluorine-containing copolymer according to any one of <1> to <3>, wherein in Formula 2, X represents a chlorine atom.
<5> The method of producing a fluorine-containing copolymer according to any one of <1> to <4>, wherein in Formulae T1 to T6, each A¹ independently represents a methyl group, a tert-butyl group, -OR, or -NR₂, each A² independently represents a methyl group, a tert-butyl group, -OR, or -NR₂, and each R independently represents a methyl group or a tert-butyl group.
<6> The method of producing a fluorine-containing copolymer according to any one of <1> to <5>, wherein in Formulae 1 and 2, each Z¹ is independently a group represented by any one of Formulae T1 to T3.
<7> The method of producing a fluorine-containing copolymer according to any one of <1> to <6>, wherein in Formulae 1 and 2, each Z¹ is independently a group represented by any one of Formula T1.
<8> The method of producing a fluorine-containing copolymer according to any one of <1> to <7>, wherein in Formula 3, Y³ represents a carbon atom.
<9> The method of producing a fluorine-containing copolymer according to any one of <1> to <8>, wherein 0.5 ≤ Mₛₒₗ × S/Mₘₒₙ ≤ 1.0 is satisfied in a case in which a substance amount (mol) of polymerization solvent A is Mₛₒₗ, a total solubility (mol/mol) of the ethylene and the tetrafluoroethylene with respect to the polymerization solvent A is S, and a total substance amount (mol) of the ethylene and the tetrafluoroethylene, dissolved in the polymerization solvent excluding the water, is Mₘₒₙ, in any stage during polymerization.

### Advantageous Effects of Invention

In accordance with the present disclosure, a method of producing a fluorine-containing copolymer of which the polymerization rate is higher than those of conventional fluorine-containing copolymers is provided.

### DESCRIPTION OF EMBODIMENTS

In the present disclosure, a numerical range expressed by "x to y" means a range including the values of x and y as the minimum and maximum values, respectively.

In a numerical range expressed in a stepwise manner in the present disclosure, the upper or lower limit value expressed in a certain numerical range may be replaced by the upper or lower limit value in another numerical range expressed in a stepwise manner. In a numerical range expressed in the present disclosure, the upper or lower limit value expressed in a certain numerical range may be replaced by values described in Examples.

In the present disclosure, a combination of two or more preferred aspects is more preferred aspect.

In the present disclosure, in a case in which plural kinds of substances corresponding to each component exist, the amount of each component means, unless otherwise specified, the total amount of the plural kinds of substances.

### [Method of Producing Fluorine-Containing Copolymer]

A method of producing a fluorine-containing copolymer of the present disclosure is a method including performing suspension polymerization by using monomers including ethylene and tetrafluoroethylene in a polymerization medium including water and a polymerization solvent A that is not compatible with water and that is at least one kind selected from the group consisting of compounds represented by the following Formulae 1 to 3.

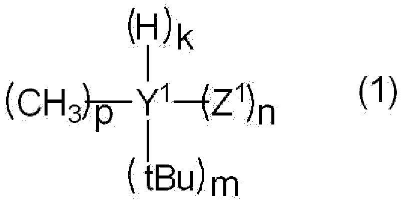

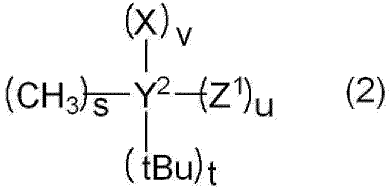

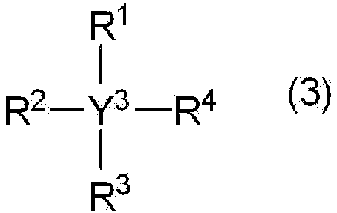

In Formula 1, Y¹ represents a nitrogen atom or an oxygen atom,
in a case in which Y¹ is a nitrogen atom, each of p, m, n, and k is independently an integer satisfying p + m ≥ 1 and p + m + n + k = 3,
in a case in which Y¹ is an oxygen atom, k is 0, each of p, m, n, and k is independently an integer satisfying p + m ≥ 1 and p + m + n = 2,
in a case in which p is 1 or more, n is 1 or more,
in Formula 2, Y² represents a carbon atom, a silicon atom, a phosphorus atom, or a sulfur atom,
in a case in which Y² is a carbon atom or a silicon atom, each of s, t, u, and v is independently an integer satisfying s + t ≥ 1 and s + t + u + v = 4,
in a case in which Y² is a phosphorus atom, each of s, t, u, and v is independently an integer satisfying s + t ≥ 1 and s + t + u + v = 3,
in a case in which Y² is a sulfur atom, each of s, t, u, and v is independently an integer satisfying s + t ≥ 1 and s + t + u + v = 2,
in a case in which s is 1 or more, u is 1 or more,
each X independently represents a chlorine atom or a bromine atom,
in Formulae 1 and 2, each Z¹ is independently a group represented by any one of the following Formulae T1 to T6,
in Formula 3, Y³ represents a carbon atom or a silicon atom, and
each of R¹ to R⁴ independently represents a methyl group, a tert-butyl group, or a tert-butoxy group.

In Formulae 1 and 2, "tBu" means a tert-butyl group.

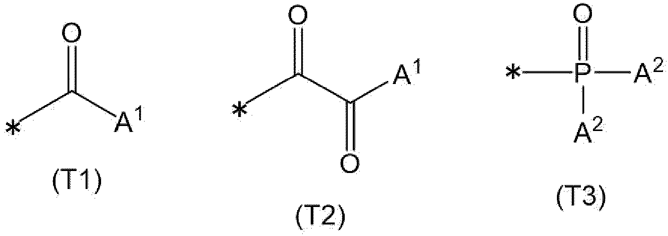

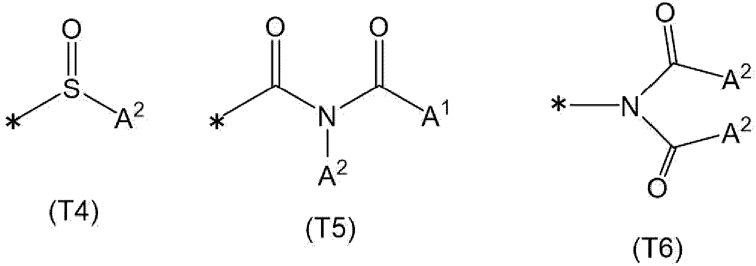

In Formulae T1 to T6, each A¹ independently represents a hydrogen atom, a methyl group, a tert-butyl group, -OR, or -NR₂, each A² independently represents a methyl group, a tert-butyl group, -OR, or -NR₂, each R independently represents a methyl group or a tert-butyl group, and * represents a binding site.

In the case of using the method of producing a fluorine-containing copolymer of the present disclosure, polymerization proceeds at a higher polymerization rate than those of conventional fluorine-containing copolymers, and the fluorine-containing copolymer can be obtained. The present inventors presume that the reason that such an effect can be exerted is as follows.

In the method of producing a fluorine-containing copolymer of the present disclosure, the polymerization is performed in the polymerization medium including water and the polymerization solvent A that is not compatible with water and that is at least one kind selected from the group consisting of the compounds represented by Formulae 1 to 3. Each polymerization solvent A has a low chain-transfer property. Therefore, it is presumed that the polymerization of the monomers including ethylene and tetrafluoroethylene proceeds smoothly.

The method of producing a fluorine-containing copolymer and the fluorine-containing copolymer of the present disclosure is described in detail below.

### (Polymerization Medium)

The polymerization medium includes at least one polymerization solvent A selected from the group consisting of the compounds represented by Formulae 1 to 3.

### <Compound Represented by Formula 1>

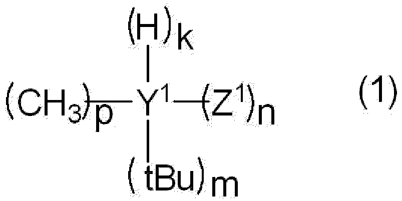

In Formula 1, Y¹ represents a nitrogen atom or an oxygen atom.

In a case in which Y¹ is a nitrogen atom, each of p, m, n, and k is independently an integer satisfying p + m ≥ 1 and p + m + n + k = 3.

In a case in which Y¹ is an oxygen atom, k is 0, each of p, m, n, and k is independently an integer satisfying p + m ≥ 1 and p + m + n = 2.

In a case in which p is 1 or more, n is 1 or more.

Each Z¹ is independently a group represented by any one of the following Formulae T1 to T6.

In Formulae T1 to T6, each A¹ independently represents a hydrogen atom, a methyl group, a tert-butyl group, -OR, or -NR₂, each A² independently represents a methyl group, a tert-butyl group, -OR, or -NR₂, each R independently represents a methyl group or a tert-butyl group, and * represents a binding site.

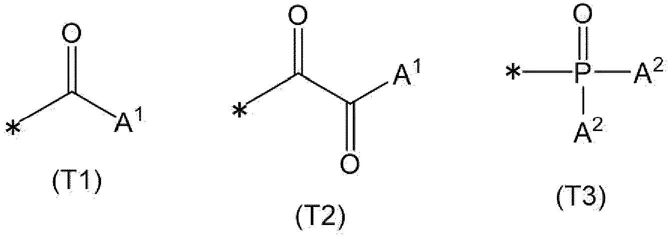

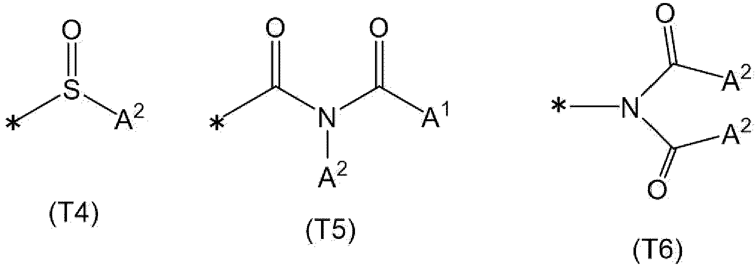

Examples of combinations of p, m, n, and k in Formula 1 include the following aspects:
in a case in which Y¹ is a nitrogen atom,
(p, m, n, k) = (0, 1, 2, 0), (1, 0, 2, 0), (0, 2, 0, 1), (0, 2, 1, 0), (1, 1, 1, 0), or (0, 3, 0, 0); and
in a case in which Y¹ is an oxygen atom,
(p, m, n, k) = (0, 1, 1, 0), (1, 0, 1, 0), or (0, 2, 0, 0).

In Formula 1, Y¹ is preferably an oxygen atom from the viewpoint of enhancing a polymerization rate and increasing a molecular weight. Especially, (p, m, n, k) is preferably (0, 1, 1, 0) or (1, 0, 1, 0) as a combination of p, m, n, and k.

In a case in which n is 1 or more, each Z¹ is independently a group represented by any one of Formulae T1 to T6, preferably a group represented by any one of Formulae T1 to T3, and more preferably a group represented by Formula T1, from the viewpoint of enhancing a polymerization rate.

In Formulae T1 to T6, each A¹ independently represents a hydrogen atom, a methyl group, a tert-butyl group, -OR, or -NR₂, each A² independently represents a methyl group, a tert-butyl group, -OR, or -NR₂, and each R independently represents a methyl group or a tert-butyl group. Especially, it is preferable that each A¹ independently represents a methyl group, a tert-butyl group, -OR, or -NR₂, each A² independently represents a methyl group, a tert-butyl group, -OR, or -NR₂, and each R independently represents a methyl group or a tert-butyl group.

In the compound represented by Formula 1, examples of Z¹ include the following compounds.

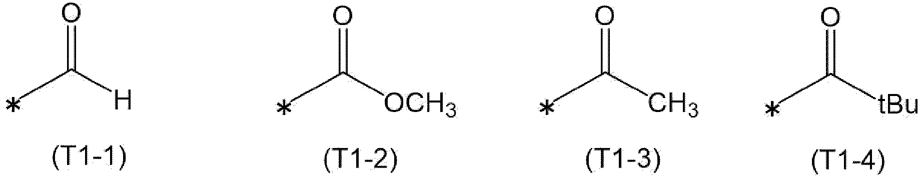

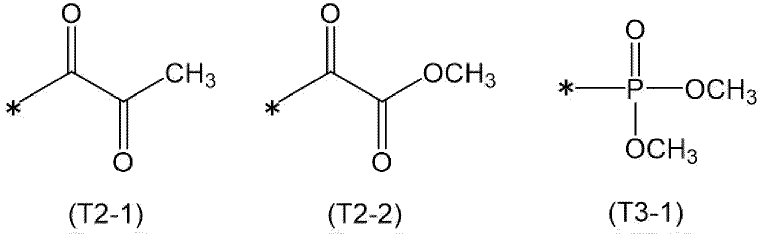

Specific examples of the compound represented by Formula 1 are described below, but the compound represented by Formula 1 is not limited thereto.

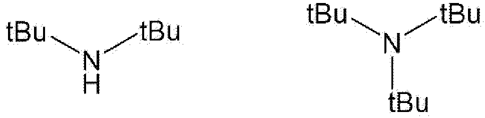

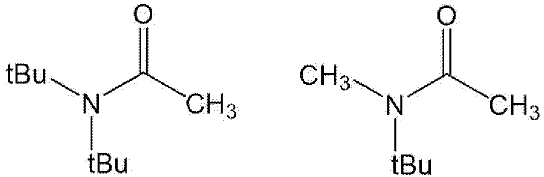

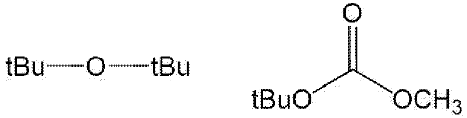

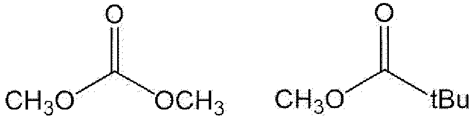

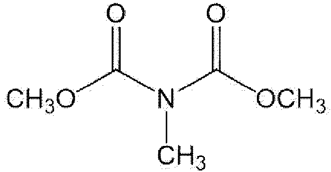

### <Compound Represented by Formula 2>

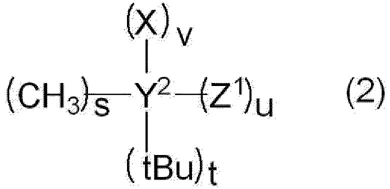

In Formula 2, Y² represents a carbon atom, a silicon atom, a phosphorus atom, or a sulfur atom.

In a case in which Y² is a carbon atom or a silicon atom, each of s, t, u, and v is independently an integer satisfying s + t ≥ 1 and s + t + u + v = 4.

In a case in which Y² is a phosphorus atom, each of s, t, u, and v is independently an integer satisfying s + t ≥ 1 and s + t + u + v = 3.

In a case in which Y² is a sulfur atom, each of s, t, u, and v is independently an integer satisfying s + t ≥ 1 and s + t + u + v = 2.

In a case in which s is 1 or more, u is 1 or more.

Each X independently represents a chlorine atom or a bromine atom.

Each Z¹ is independently a group represented by any one of the following Formulae T1 to T6.

Examples of combinations of s, t, u, and v in Formula 2 include the following aspects:
in a case in which Y² is a carbon atom or a silicon atom,
(s, t, u, v) = (0, 1, 0, 3), (0, 1, 1, 2), (0, 1, 2, 1), (0, 1, 3, 0), (1, 0, 1, 2), (1, 0, 2, 1), (1, 0, 3, 0), (0, 2, 0, 2), (0, 2, 1, 1), (0, 2, 2, 0), (1, 1, 1, 1), (1, 1, 2, 0), (2, 0, 1, 1), (2, 0, 2, 0), (0, 3, 0, 1), (0, 3, 1, 0), (1, 2, 1, 0), (2, 1, 1, 0), or (3, 0, 1, 0);
in a case in which Y² is a phosphorus atom,
(s, t, u, v) = (0, 1, 0, 2), (0, 1, 1, 1), (0, 1, 2, 0), (1, 0, 1, 1), (1, 0, 2, 0), (0, 2, 0, 1), (0, 2, 1, 0), (1, 1, 1, 0), (2, 0, 1, 0), or (0, 3, 0, 0); and
in a case in which Y² is a sulfur atom,
(s, t, u, v) = (0, 1, 0, 1), (0, 1, 1, 0), (1, 0, 1, 0), or (0, 2, 0, 0).

As combinations of s, t, u, and v, especially, (s, t, u, v) is preferably (3, 0, 1, 0) in a case in which Y² is a carbon atom, and (s, t, u, v) is preferably (0, 3, 0, 0) in a case in which Y² is a phosphorus atom.

In Formula 2, Y² is preferably a carbon atom, a silicon atom, or a sulfur atom, more preferably to a carbon atom or a silicon atom, and still more preferably a carbon atom from the viewpoint of enhancing a polymerization rate and increasing a molecular weight.

In Formula 2, X is preferably a chlorine atom from the viewpoint of enhancing a polymerization rate.

In a case in which u is 1 or more, each Z¹ is independently a group represented by any one of Formulae T1 to T6, preferably a group represented by any one of Formulae T1 to T3, and more preferably a group represented by Formula T1 from the viewpoint of enhancing a polymerization rate.

In Formulae T1 to T6, each A¹ independently represents a hydrogen atom, a methyl group, a tert-butyl group, -OR, or -NR₂, each A² independently represents a methyl group, a tert-butyl group, -OR, or -NR₂, and each R independently represents a methyl group or a tert-butyl group. Especially, it is preferable that each A¹ independently represents a methyl group, a tert-butyl group, -OR, or -NR₂, each A² independently represents a methyl group, a tert-butyl group, -OR, or -NR₂, and each R independently represents a methyl group or a tert-butyl group.

Examples of Z¹ in the compound represented by Formula 2 include those similar to Z¹ in the compound represented by Formula 1.

Specific examples of the compound represented by Formula 2 are described below, without limitation to such compounds represented by Formula 2.

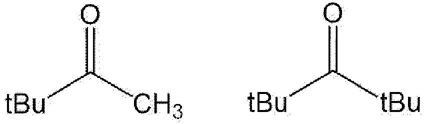

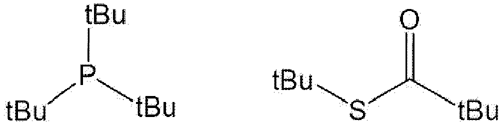

<Compound Represented by Formula 3>

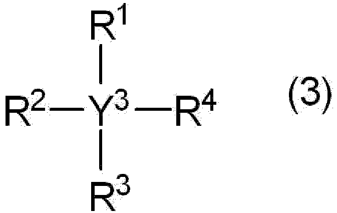

In Formula 3, Y³ represents a carbon atom or a silicon atom.

Each of R¹ to R⁴ independently represents a methyl group, a tert-butyl group, or a tert-butoxy group.

Specific examples of the compound represented by Formula 3 are described below, but the compound represented by Formula 3 is not limited thereto.

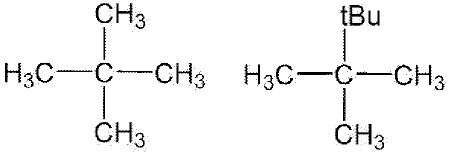

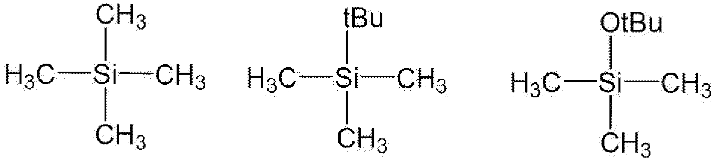

In Formula 3, Y³ is preferably a carbon atom from the viewpoint of enhancing a polymerization rate and increasing a molecular weight.

In Formula 3, R¹ to R⁴ are preferably methyl groups from the viewpoint of enhancing a polymerization rate and increasing a molecular weight.

In the polymerization solvent A, a compound corresponding to the compound represented by Formula 1 and corresponding to the compound represented by Formula 2 is regarded as the compound represented by Formula 1. In other words, it is considered that the compound represented by Formula 2 does not include the compound represented by Formula 1. In the polymerization solvent A, a compound corresponding to the compound represented by Formula 1 and corresponding to the compound represented by Formula 3 is regarded as the compound represented by Formula 1. In other words, it is considered that the compound represented by Formula 3 does not include the compound represented by Formula 1.

For example, methyl pivalate and tert-butyl pivalate are regarded as compounds represented by Formula 1 in spite of corresponding to the compound represented by Formula 1 and corresponding to the compound represented by Formula 2. In other words, it is considered that the compound represented by Formula 2 includes neither methyl pivalate nor tert-butyl pivalate. Di-tert-butyl ether is regarded as the compound represented by Formula 1 in spite of corresponding to the compound represented by Formula 1 and corresponding to the compound represented by Formula 3. In other words, it is considered that the compound represented by Formula 3 does not include di-tert-butyl ether.

The polymerization solvent A is a solvent that is not compatible with water from the viewpoint of performing suspension polymerization. Whether or not the polymerization solvent A is a solvent that is not compatible with water is determined by the following method.

First, water and the solvent to be determined are put in an airtight container so that the mass ratio thereof (water: solvent to be determined) is 10: 7. The water and the solvent are shaken for 1 minute under ordinary pressure at 25°C, and then left to stand for 10 minutes. It is determined that the solvent to be determined is a solvent that is not compatible with water in a case in which, after 10 minutes, the water and the solvent to be determined are separated into two phases. From the viewpoint of performing suspension polymerization, it is necessary that the polymerization medium is separated into two phases.

### <Water>

The polymerization medium includes water.

The water is not particularly limited, and preferably includes no impurity.
Examples of the water include distilled water, ion-exchanged water, and pure water.

The proportion of water to the polymerization solvent is from 10% by volume to 80% by volume. A case in which the proportion of water is 80% by volume or less is advantageous from the viewpoint of a polymerization rate.

The proportion of the volume of water to the polymerization solvent A is preferably from 10% by volume to 80 % by volume, and more preferably from 30% by volume to 60% by volume from the viewpoint of a polymerization rate, heat removal, and the easiness of stirring. A case in which the above-described proportion is 10% by volume or more is advantageous from the viewpoint of heat removal and stirring. In contrast, a case in which the above-described proportion is 80% by volume or less is advantageous from the viewpoint of a polymerization rate.

### <Other Polymerization Solvent>

In the method of producing a fluorine-containing copolymer of the present disclosure, the polymerization medium may include an additional polymerization solvent other than the polymerization solvent A and water. However, from the viewpoint of enhancing a polymerization rate, it is preferable that the polymerization medium does not include another polymerization solvent, and it is preferable that the polymerization medium consists of the polymerization solvent A and water.

Examples of such other polymerization solvents include: aromatic hydrocarbon solvents such as benzene, toluene, and xylene; sulfoxide-based solvents such as dimethylsulfoxide (DMSO); ketone-based solvents such as acetone and 2-butanone(methylethylketone); ether-based solvents such as tetrahydrofuran (THF) and dioxane; ester-based solvents such as ethyl acetate; alcohol-based solvents such as tert-butyl alcohol; and halogen-based solvents such as hexafluoroisopropanol, chloroform, 1H-perfluorohexane, 1H, 1H, 1H,2H,2H-perfluorooctane, 1,3-bis(trifluoromethyl)benzene, 1,4-bis(trifluoromethyl)benzene, benzotrifluoride, chlorobenzene, and 1,2-dichlorobenzene.

### (Monomers Including Ethylene and Tetrafluoroethylene)

In the method of producing a fluorine-containing copolymer of the present disclosure, monomers including ethylene and tetrafluoroethylene are polymerized. In other words, the fluorine-containing copolymer obtained by the method of producing the fluorine-containing copolymer of the present disclosure includes a structural unit derived from ethylene (hereinafter also referred to as "E unit") and a structural unit derived from tetrafluoroethylene (hereinafter also referred to as "TFE unit").

The monomers used in the polymerization may include an additional monomer other than ethylene and tetrafluoroethylene. In other words, the fluorine-containing copolymer may include an additional structural unit other than the E unit and the TFE unit.

Examples of such additional monomers other than ethylene and tetrafluoroethylene include the following monomers (1) to (7). Such an additional monomer may be one, or may be two or more.

Monomer (1): compound represented by CH₂ = CX¹¹ (CF₂)ₙY¹¹.

However, each of X¹¹ and Y¹¹ is independently a hydrogen atom or a fluorine atom, and n is an integer from 2 to 8.

Monomer (2): fluoroolefin including a hydrogen atom in an ethylenically unsaturated group such as vinylidene fluoride, vinyl fluoride, trifluoroethylene, or hexafluoro isobutylene.

Monomer (3): fluoroolefin including no hydrogen atom in an ethylenically unsaturated group such as hexafluoropropylene (excluding TFE).

Monomer (4): perfluoro (alkyl vinyl ether) such as perfluoro(methyl vinyl ether), perfluoro(ethyl vinyl ether), perfluoro(propyl vinyl ether), or perfluoro(butyl vinyl ether).

Monomer (5): perfluoro(vinyl alkenyl ether) that has two ethylenically unsaturated bonds and can be cyclically polymerized, such as CF₂=CFOCF₂CF=CF₂ or CF₂=CFO(CF₂)₂CF=CF₂.

Monomer (6): fluorine-containing monomer having an aliphatic ring structure, such as perfluoro(2,2-dimethyl-1,3-dioxole), 2,2,4-trifluoro-5-trifluoromethoxy-1,3-dioxole, or perfluoro(2-methylene-4-methyl-1,3-dioxolane).

Monomer (7): monomer having a polar functional group and having no fluorine atom (hereinafter also referred to as "monomer containing polar functional group".

Examples of such polar functional groups include a hydroxyl group, a carboxy group, an epoxy group, and an acid anhydride residue. Especially, the polar functional group is preferably an acid anhydride residue.

Examples of such monomers containing polar functional groups include: vinyl ether having a hydroxyl group and an epoxy group; unsaturated carboxylic acids (for example, maleic acid, itaconic acid, citraconic acid, and undecylenic acid); and unsaturated multivalent carboxylic acid anhydrides (for example, maleic anhydride, itaconic anhydride, citraconic anhydride, and himic anhydride).

In the above-described monomers (1) to (7), the monomer (1) is preferred in view of favorable reactivity with ethylene and tetrafluoroethylene. Specific examples of the monomer (1) include CH₂=CF(CF₂)₂F, CH₂=CF(CF₂)₃F, CH₂=CF(CF₂)₄F, CH₂=CF(CF₂)₅F, CH₂=CF(CF₂)₈F, CH₂=CF(CF₂)₂H, CH₂=CF(CF₂)₃H, CH₂=CF(CF₂)₄H, CH₂=CF(CF₂)₅H, CH₂=CF(CF₂)₈H, CH₂=CH(CF₂)₂F, CH₂=CH(CF₂)₃F, CH₂=CH(CF₂)₄F, CH₂=CH(CF₂)₅F, CH₂=CH(CF₂)₆F, CH₂=CH(CF₂)₈F, CH₂=CH(CF₂)₂H, CH₂=CH(CF₂)₃H, CH₂=CH(CF₂)₄H, CH₂=CH(CF₂)₅H, and CH₂=CH(CF₂)₈H. Especially, the monomer (1) is preferably CH₂=CH(CF₂)ₙF. The integer n in the monomer (1) is from 2 to 8, preferably from 3 to 7, and more preferably from 4 to 6.

The content of additional monomer in the monomers used in the polymerization is preferably from 0.001% by mol to 20% by mol, more preferably from 0.1% by mol to 15% by mol, and still more preferably from 0.2% by mol to 5% by mol with respect to the total amount of the monomers. In a case in which the additional monomer is the monomer (7), the content thereof is preferably from 0.01% by mol to 5% by mol, more preferably from 0.05% by mol to 3% by mol, and still more preferably from 0.1% by mol to 1% by mol.

The molar ratio between the contents of ethylene and tetrafluoroethylene (ethylene/tetrafluoroethylene) is preferably from 20/80 to 80/20, more preferably from 70/30 to 30/70, and still more preferably from 50/50 to 35/65.

### (Polymerization Initiator)

In the method of producing a fluorine-containing copolymer of the present disclosure, it is preferable to use a polymerization initiator in order to initiate polymerization reaction.

The polymerization initiator is preferably a radical polymerization initiator. Examples of the radical polymerization initiator include: azo compounds such as azobisisobutyronitrile and 2,2'-azobis(4-methoxy-2,4-dimethylvaleronitrile); peroxydicarbonates such as diisopropyl peroxydicarbonate; peroxy esters such as tert-butyl peroxypivalate, tert-butyl peroxyisobutyrate, and tert-butyl peroxyacetate; non-fluorine-based diacyl peroxides such as diisobutyryl peroxide, octanoyl peroxide, benzoyl peroxide, and lauroyl peroxide; fluorine-containing diacyl peroxides such as (Z(CF₂)ₚCOO)₂ (Z is a hydrogen atom, a fluorine atom, or a chlorine atom, and p is an integer from 1 to 10); perfluoro-tert-butyl peroxide; and inorganic peroxides such as potassium persulfate, sodium persulfate, and ammonium persulfate.

### (Chain Transfer Agent)

In the method of producing a fluorine-containing copolymer of the present disclosure, the polymerization reaction may be performed in the presence of a chain transfer agent. The presence of the chain transfer agent facilitates adjustment of the molecular weight of the produced fluorine-containing polymer.

Examples of the chain transfer agent include: alcohols such as methanol, ethanol, 2,2,2-trifluoroethanol, 2,2,3,3-tetrafluoropropanol, 1,1,1,3,3,3-hexafluoroisopropanol, and 2,2,3,3,3-pentafluoropropanol; hydrocarbons such as n-pentane, n-hexane, and cyclohexane; hydrofluorocarbons such as CF₂H₂; ketones such as acetone; mercaptans such as methyl mercaptan; esters such as methyl acetate and ethyl acetate; and ethers such as diethyl ether and methylethyl ether.

### (Polymerization Method)

The polymerization in the method of producing a fluorine-containing copolymer of the present disclosure is suspension polymerization. A suspension polymerization method is a polymerization method in which a monomer is polymerized in a state in which the monomer is suspended in a polymerization medium containing water. The suspension polymerization is distinguished from solution polymerization in which a monomer is polymerized in a state in which the monomer is dissolved in a polymerization medium.

In the method of producing a fluorine-containing copolymer of the present disclosure, the polymerization reaction is allowed to proceed by, for example, continuously or intermittently adding the monomers including ethylene and tetrafluoroethylene into the polymerization medium.

### (Polymerization Conditions)

In the method of producing a fluorine-containing copolymer of the present disclosure, it is preferable that 0.5 ≤ Mₛₒₗ × S/Mₘₒₙ ≤ 1.0 is satisfied in a case in which the substance amount (mol) of polymerization solvent A is Mₛₒₗ, the total solubility (mol/mol) of the ethylene and the tetrafluoroethylene with respect to the polymerization solvent A is S, and the total substance amount (mol) of the ethylene and the tetrafluoroethylene, dissolved in the polymerization solvent excluding the water, is Mₘₒₙ, in any stage during polymerization.

The phrase "during polymerization" in the present disclosure refers to a period in which a fluorine-containing copolymer including ethylene and tetrafluoroethylene is generated.

Mₛₒₗ × S/Mₘₒₙ is 1.0 in a case in which the polymerization medium consists of the polymerization solvent A and water and does not include any polymerization medium other than the polymerization solvent A and the water. Mₛₒₗ × S/Mₘₒₙ is less than 1.0 in a case in which the polymerization medium includes a polymerization medium other than the polymerization solvent A and water.

Chain transfer caused by the polymerization medium is suppressed to improve a polymerization rate in a case in which Mₛₒₗ × S/Mₘₒₙ is from 0.5 to 1.0. From the viewpoint of further improving a polymerization rate, Mₛₒₗ × S/Mₘₒₙ is more preferably from 0.7 to 1.0, and still more preferably from 0.85 to 1.0.

### <Substance Amount Mₛₒₗ of Polymerization Solvent A>

Mₛₒₗ representing the substance amount of the polymerization solvent A is calculated using the following equation. 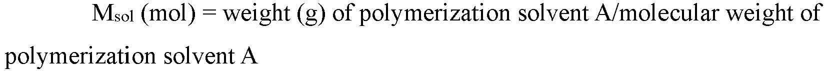 Msol (mol) = weight (g) of polymerization solvent A/molecular weight of polymerization solvent A

As the weight of the polymerization solvent A, a value obtained by measuring the weight under atmospheric pressure is adopted.

### <Total Solubility S of Ethylene and Tetrafluoroethylene with Respect to Polymerization Solvent A>

The total solubility S of ethylene and tetrafluoroethylene with respect to the polymerization solvent A is calculated by the following method.

First, the vapor pressure Pₛₒₗ of the polymerization solvent A is measured. Pₛₒₗ is set at a pressure indicated by putting a polymerization medium in an autoclave that includes a stirring machine and is made of stainless steel, performing freezing degassing twice, and then keeping the internal temperature of a reactor at a predetermined temperature T. T means a liquid-phase temperature. The temperature of a gas-phase portion is considered to be equal to the liquid-phase temperature.

The weighed polymerization solvent A is put in the autoclave that includes the stirring machine and is made of stainless steel. The substance amount M' (mol) of the polymerization solvent A is calculated based on the weight (g) of the weighed polymerization solvent A.

Then, a weighed mixed gas of ethylene and tetrafluoroethylene is put in the autoclave that includes the stirring machine and is made of stainless steel. In such a case, a mixture ratio (molar ratio) between ethylene and tetrafluoroethylene is set at ethylene: tetrafluoroethylene = x: y. The loading amount Mₐₗₗ (mol) of mixed gas of ethylene and tetrafluoroethylene is calculated, using the weight W (g) of the weighed mixed gas, based on the following equation. ${M}_{all} = W / \left(28x+100y\right)$

In a case in which time sufficiently elapses and pressure becomes constant, the pressure is regarded as a total pressure Pₐₗₗ.

The partial pressure Pₘₒₙ of the mixed gas of ethylene and tetrafluoroethylene is calculated based on the following equation. ${P}_{mon} = {P}_{all} - {P}_{sol}$

The volume V of the gas-phase portion of the autoclave that includes the stirring machine and is made of stainless steel is calculated based on the following equation. 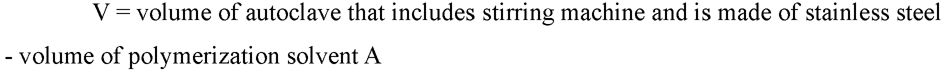 V = volume of autoclave that includes stirring machine and is made of stainless steel - volume of polymerization solvent A

The substance amount M_{g} (mol) of mixed gas of ethylene and tetrafluoroethylene, present in the gas-phase portion of the autoclave that includes the stirring machine and is made of stainless steel, is calculated based on the following equation. R means a gas constant. ${M}_{g} = {P}_{mon} V / RT$

The substance amount M'ₘₒₙ (mol) of mixed gas of ethylene and tetrafluoroethylene, dissolved in the polymerization solvent A, is calculated based on the following equation. $M {′}_{mon} = {M}_{all} - {M}_{g}$

The total solubility S of ethylene and tetrafluoroethylene with respect to the polymerization solvent A is calculated based on the following equation. $S = M {′}_{mon} / M ′$

### <Total Substance Amount Mₘₒₙ of Ethylene and Tetrafluoroethylene Dissolved in Polymerization Medium Excluding Water>

The total substance amount Mₘₒₙ of ethylene and tetrafluoroethylene dissolved in the polymerization medium excluding water is calculated by the following method.

First, the vapor pressure P'ₛₒₗ of the polymerization medium excluding water is measured. P'ₛₒₗ is set at a pressure indicated by putting a polymerization medium excluding water in an autoclave that includes a stirring machine and is made of stainless steel, performing freezing degassing twice, and then keeping the internal temperature of a reactor at a predetermined temperature T. T means a liquid-phase temperature. The temperature of a gas-phase portion is considered to be equal to the liquid-phase temperature.

Then, a weighed mixed gas of ethylene and tetrafluoroethylene is put in the autoclave that includes the stirring machine and is made of stainless steel. In such a case, a mixture ratio (molar ratio) between ethylene and tetrafluoroethylene is set at ethylene: tetrafluoroethylene = x: y. The loading amount M'ₐₗₗ (mol) of mixed gas of ethylene and tetrafluoroethylene is calculated, using the weight W' (g) of the weighed mixed gas, based on the following equation. $M {′}_{all} = W ′ / \left(28x+100y\right)$

In a case in which time sufficiently elapses and pressure becomes constant, the pressure is regarded as a total pressure P'ₐₗₗ.

The partial pressure P'ₘₒₙ of the mixed gas of ethylene and tetrafluoroethylene is calculated based on the following equation. $P {′}_{mon} = P {′}_{all} - P {′}_{sol}$

The volume V' of the gas-phase portion of the autoclave that includes the stirring machine and is made of stainless steel is calculated based on the following equation. 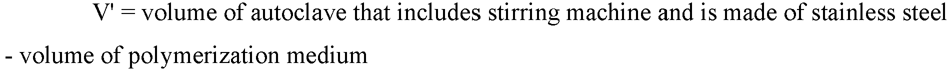 V' = volume of autoclave that includes stirring machine and is made of stainless steel - volume of polymerization medium

The substance amount M'_{g} (mol) of mixed gas of ethylene and tetrafluoroethylene, present in the gas-phase portion of the autoclave that includes the stirring machine and is made of stainless steel, is calculated based on the following equation. R means a gas constant. $M {′}_{g} = P {′}_{mon} \times V ′ / RT$

The substance amount Mₘₒₙ (mol) of mixed gas of ethylene and tetrafluoroethylene, dissolved in the polymerization medium excluding water, is calculated based on the following equation. ${M}_{mon} = M {′}_{all} - M {′}_{g}$

In the method of producing a fluorine-containing copolymer of the present disclosure, a polymerization temperature is preferably from 0°C to 100°C, and more preferably from 20°C to 90°C. A polymerization pressure is preferably from 0.1 MPaG to 10 MPaG, and more preferably from 0.5 MPaG to 3 MPaG. Polymerization time is preferably from 1 hour to 30 hours, and more preferably from 2 hours to 20 hours.

### Examples

The present disclosure is further specifically described below with reference to Examples. However, the present disclosure is not limited to Examples below without departing from the gist of the present disclosure.

### [Example 1]

An autoclave that had an internal volume of 1000 mL, included a stirring machine, and was made of stainless steel was put in an ice-water bath and kept for 10 minutes, 300 mL (3.6 mol) of dimethyl carbonate ("DMC" in a table) and 300 mL (16.7 mol) of ion-exchanged water were loaded, and freezing degassing was performed twice.

Stirring was performed while increasing an internal temperature to 30°C, and a mixed gas of ethylene and tetrafluoroethylene as monomers (ethylene: tetrafluoroethylene (molar ratio) = 50: 50) was press-fitted so that the internal pressure of a reactor was 1.5 MPaG. Further, 18.3 mg (0.11 mmol) of diisobutyryl peroxide (product name "PEROYL IB", manufactured by NOF CORPORATION, "IBPO" in the table) was press-fitted as a polymerization initiator, and the resultant was stirred at 500 rpm (500 revolutions per minute) for 3 hours while keeping the internal temperature at 30°C. As a result, a polymer including a copolymer of ethylene and tetrafluoroethylene was obtained in a slurry state.

The reactor was spontaneously cooled below room temperature, followed by discharging unreacted ethylene and tetrafluoroethylene.

The obtained polymer in the slurry state was put in methanol, followed by filtering a precipitate. The precipitate was dried in a vacuum oven at 40°C for 12 hours. Thus, 8.3 g of a copolymer of ethylene and tetrafluoroethylene was obtained.

Dimethyl carbonate corresponds to the compound represented by Formula 1, in Formula 1, Y1 is an oxygen atom, p is 1, m is 0, n is 1, k is 0, Z1 is a group represented by T1, and A¹ is -OR, and R is a methyl group in T1.

### [Example 2]

A copolymer of ethylene, tetrafluoroethylene, and perfluorobutylethylene was obtained by a method similar to that in Example 1 except that the loading amounts of polymerization media were changed to 120 mL (1.4 mol) of dimethyl carbonate and 480 mL (26.7 mmol) of ion-exchanged water, the loading amount of polymerization initiator was changed to 7.3 mg (0.04 mmol), and 2.2 g of perfluorobutylethylene (8.9 mmol) which was a monomer was also loaded in the case of loading dimethyl carbonate and ion-exchanged water which were the polymerization media.

### [Example 3]

A copolymer of ethylene, tetrafluoroethylene, and perfluorobutylethylene was obtained by a method similar to that in Example 2 except that the loading amounts of polymerization media were changed to 300 mL (3.6 mol) of dimethyl carbonate and 300 mL (16.7 mmol) of ion-exchanged water, and the loading amount of polymerization initiator was changed to 18.3 mg (0.11 mmol).

### [Example 4]

A copolymer of ethylene, tetrafluoroethylene, and perfluorobutylethylene was obtained by a method similar to that in Example 2 except that the loading amounts of polymerization media were changed to 480 mL (5.7 mol) of dimethyl carbonate and 120 mL (6.7 mmol) of ion-exchanged water, and the loading amount of polymerization initiator was changed to 29.3 mg (0.17 mmol).

### [Example 5]

A copolymer of ethylene, tetrafluoroethylene, and perfluorobutylethylene was obtained by a method similar to that in Example 3 except that a polymerization initiator was changed to 2,2'-azobis(4-methoxy-2,4-dimethylvaleronitrile) (product name "V70", manufactured by FUJIFILM Wako Pure Chemical Corporation, "AMVN" in the table), and a polymerization temperature was changed to 35°C.

### [Example 6]

A copolymer of ethylene, tetrafluoroethylene, and perfluorobutylethylene was obtained by a method similar to that in Example 3 except that a polymerization initiator was changed to tert-butylperoxypivalate (product name "PERBUTYL PV", manufactured by NOF CORPORATION, "PBPV" in the table), and a polymerization temperature was changed to 66°C.

### [Example 7]

A copolymer of ethylene and tetrafluoroethylene was obtained by a method similar to that in Example 1 except that polymerization media were changed to di-tert-butylcarbonate ("Boc₂O" in the table) and water, a polymerization initiator was changed to diisopropyl peroxydicarbonate (product name "PEROYL IPP", manufactured by NOF CORPORATION, "IPP" in the table), and a polymerization temperature was changed to 45°C.

Di-tert-butylcarbonate corresponds to the compound represented by Formula 1, in Formula 1, Y¹ is an oxygen atom, p is 0, m is 1, n is 1, k is 0, Z¹ is a group represented by T1, and A¹ is -OR, and R is a tert-butyl group in T1.

### [Example 8]

A copolymer of ethylene and tetrafluoroethylene was obtained by a method similar to that in Example 1 except that polymerization media were changed to methyl pivalate ("MePiv" in the table) and water.

Methyl pivalate corresponds to the compound represented by Formula 1, in Formula 1, Y¹ is an oxygen atom, p is 1, m is 0, n is 1, k is 0, Z¹ is a group represented by T1, and A¹ is a tert-butyl group in T1.

### [Example 9]

A copolymer of ethylene and tetrafluoroethylene was obtained by a method similar to that in Example 5 except that polymerization media were changed to tri-tert-butylphosphine ("TTBP" in the table) and water, and a polymerization temperature was changed to 35°C.

Tri-tert-butylphosphine corresponds to the compound represented by Formula 2, and, in Formula 2, Y² is a phosphorus atom, s is 0, t is 3, u is 0, and v is 0.

### [Example 10]

A copolymer of ethylene and tetrafluoroethylene was obtained by a method similar to that in Example 1 except that polymerization media were changed to tetramethylsilane ("TMS" in the table) and water, and a polymerization temperature was changed to 25°C.

Tetramethylsilane corresponds to the compound represented by Formula 3, and, in Formula 3, Y³ is a silicon atom, and R¹ to R⁴ are methyl groups.

### [Example 11]

A copolymer of ethylene and tetrafluoroethylene was obtained by a method similar to that in Example 1 except that polymerization media were changed to a mixture (substance quantitative ratio of 85: 15) ("DMC/MEK = 85/15" in the table) of dimethyl carbonate and methyl ethyl ketone ("MEK" in the table), and water.

### [Example 12]

A copolymer of ethylene and tetrafluoroethylene was obtained by a method similar to that in Example 1 except that polymerization media were changed to a mixture (substance quantitative ratio of 70: 30) ("DMC/MEK = 70/30" in the table) of dimethyl carbonate and methyl ethyl ketone ("MEK" in the table), and water.

### [Example 13]

A copolymer of ethylene and tetrafluoroethylene was obtained by a method similar to that in Example 1 except that polymerization media were changed to a mixture of methyl pivalate and dimethyl carbonate (substance quantitative ratio of 50: 50) ("MePiv/DMC = 50/50" in the table), and water.

### [Example 14]

A copolymer of ethylene and tetrafluoroethylene was obtained by a method similar to that in Example 1 except that polymerization media were changed to neopentane and water, and a polymerization temperature was changed to 20°C.

Neopentane corresponds to the compound represented by Formula 3, and, in Formula 3, Y³ is a carbon atom, and R¹ to R⁴ are methyl groups.

### [Example 15]

A copolymer of ethylene and tetrafluoroethylene was obtained by a method similar to that in Example 1 except that polymerization media were changed to water and di-tert-butylketone subjected to distillation purification.

Di-tert-butylketone corresponds to the compound represented by Formula 2, in Formula 2, Y² is a carbon atom, s is 3, t is 0, u is 1, v is 0, Z¹ is a group represented by T1, and A¹ is a tert-butyl group in T1.

### [Example 16]

A copolymer of ethylene and tetrafluoroethylene was obtained by a method similar to that in Example 1 except that polymerization media were changed to 2-chloro-2,4,4-trimethyl-3-pentanone and water.

2-Chloro-2,4,4-trimethyl-3-pentanone corresponds to the compound represented by Formula 2, in Formula 2, Y² is a carbon atom, s is 2, t is 0, u is 1, v is 1, X is a chlorine atom, Z¹ is a group represented by T1, and A¹ is a tert-butyl group in T1.

### [Example 17]

Obtainment of a copolymer of ethylene, tetrafluoroethylene, and perfluorobutylethylene was attempted by a method similar to that in Example 2 except that the loading amounts of polymerization media were changed to 60 mL (0.71 mol) of dimethyl carbonate and 540 mL (30.0 mmol) of ion-exchanged water, and the loading amount of polymerization initiator was changed to 3.7 mg (0.02 mmol). However, the copolymer was not obtained.

### [Example 18]

Obtainment of a copolymer of ethylene and tetrafluoroethylene was attempted by a method similar to that in Example 1 except that polymerization media were changed to diethyl ketone and water. However, the copolymer was not obtained. Diethyl ketone does not correspond to the polymerization solvent A.

### [Example 19]

Obtainment of a copolymer of ethylene and tetrafluoroethylene was attempted by a method similar to that in Example 1 except that polymerization media were changed to tert-butyl methyl ether ("TBME" in the table) and water. However, the copolymer was not obtained. Tert-butyl methyl ether does not correspond to the polymerization solvent A.

Polymerization velocities in the production methods in Examples 1 to 16 and the melt flow rate values (MFR values) of the copolymers obtained in Examples 1 to 16 were measured. Mₛₒₗ × S/Mₘₒₙ, in a case in which the substance amount (mol) of polymerization solvent A was Mₛₒₗ, the total solubility (mol/mol) of ethylene and tetrafluoroethylene with respect to a polymerization solvent A was S, and the total substance amount (mol) of ethylene and tetrafluoroethylene, dissolved in the polymerization solvent excluding water, was Mₘₒₙ, during polymerization, was calculated. A measurement method and a calculation method are as follows. Values that were unable to be measured are indicated by "-" in the table.

### <Polymerization rate>

The polymerization velocities were calculated based on the following equation. 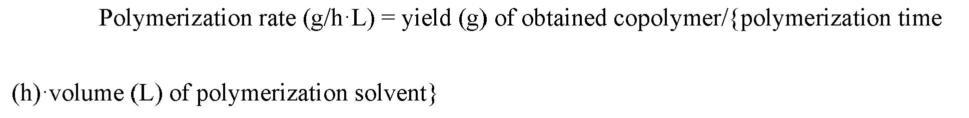 Polymerization rate (g/h·L) = yield (g) of obtained copolymer/{polymerization time (h)·volume (L) of polymerization solvent}

The polymerization solvent described in the above equation does not include any polymerization initiator.

### <MFR Value>

The mass (g) of copolymer flowing from an orifice having a diameter of 2.095 mm and a length of 8.000 mm for 10 minutes was measured using a thermal hydraulics evaluation apparatus (product name "Flowtester CFT-100EX", manufactured by SHIMADZU CORPORATION) under conditions of a temperature of 297°C and a load of 49.0 N according to ASTM D3159, and was regarded as MFR (g/10 min).

### <Mₛₒₗ × S/Mₘₒₙ>

First, Mₛₒₗ which was the substance amount (mol) of polymerization solvent A, the total solubility S (mol/mol) of ethylene and tetrafluoroethylene with respect to a polymerization solvent A, and the total substance amount (mol) Mₘₒₙ of ethylene and tetrafluoroethylene, dissolved in a polymerization medium excluding water, were calculated as described above. Then, Mₛₒₗ × S/Mₘₒₙ was calculated using Mₛₒₗ, S, and Mₘₒₙ.

The kinds of monomers, polymerization media, and polymerization initiators, and polymerization velocities and MFRs were set forth in Table 1. "Binary" is described in the case of using ethylene and tetrafluoroethylene as monomers, and "Ternary" is described in the case of using ethylene, tetrafluoroethylene, and perfluorobutylethylene as monomers.

**[Table 1]**

| | Monomers | Polymerization medium A | Proportion of water to polymerization solvent [% by volume] | Polymerization initiator | Polymerization rate [g/(L·h)] | MFR [g/10 min] | Mₛₒₗ × S/Mₘₒₙ | Polymerization temperature [°C] |
|---|---|---|---|---|---|---|---|---|
| Example 1 | Binary | DMC | 50 | IBPO | 9.2 | 0.1 | 0.99 | 30 |
| Example 2 | Ternary | DMC | 80 | IBPO | 0.9 | 4.6 | 0.99 | 30 |
| Example 3 | Ternary | DMC | 50 | IBPO | 4.2 | 4.6 | 0.99 | 30 |
| Example 4 | Ternary | DMC | 20 | IBPO | 5.9 | 4.6 | 0.99 | 30 |
| Example 5 | Ternary | DMC | 50 | AMVN | 2.9 | 5.0 | 0.99 | 35 |
| Example 6 | Ternary | DMC | 50 | PBPV | 4.7 | 12.0 | 0.99 | 66 |
| Example 7 | Binary | Boc₂O | 50 | IPP | 1.3 | 5.9 | 0.99 | 45 |
| Example 8 | Binary | MePiv | 50 | IBPO | 1.1 | 9.1 | 0.99 | 30 |
| Example 9 | Binary | TTBP | 50 | IPP | 14.0 | 2.8 | 0.99 | 35 |
| Example 10 | Binary | TMS | 50 | IBPO | 12.5 | 7.9 | 0.99 | 25 |
| Example 11 | Binary | DMC/MEK=85/15 | 50 | IBPO | 4.0 | 58.7 | 0.84 | 30 |
| Example 12 | Binary | DMC/MEK=70/30 | 50 | IBPO | 1.0 | - | 0.69 | 30 |
| Example 13 | Binary | MePiv/DMC=50/50 | 50 | IBPO | 6.8 | 6.5 | 0.99 | 30 |
| Example 14 | Binary | neopentane | 50 | IBPO | 7.5 | 4.5 | 0.99 | 20 |
| Example 15 | Binary | di-tert-butylketone | 50 | IBPO | 27.3 | 1.2 | 0.99 | 30 |
| Example 16 | Binary | 2-chloro-2,4,4-trimethyl-3-pentanone | 50 | IBPO | 41.6 | 2.3 | 0.99 | 30 |
| Example 17 | Ternary | DMC | 90 | IBPO | - | - | 0.99 | 30 |
| Example 18 | Binary | diethyl ketone | 50 | IBPO | - | - | 0.99 | 30 |
| Example 19 | Binary | TBME | 50 | IBPO | - | - | 0.99 | 30 |

As set forth in Table 1, in Examples 1 to 16, the suspension polymerization was performed using the monomers including ethylene and tetrafluoroethylene in the polymerization medium including water and the polymerization solvent A that was not compatible with water and that was at least one kind selected from the group consisting of the compounds represented by Formulae 1 to 3, the proportion of water to the polymerization medium was from 10% by volume to 80% by volume, and therefore, it was found that the polymerization velocities were higher than conventional polymerization velocities.

## Claims

1. A method of producing a fluorine-containing copolymer, the method comprising performing suspension polymerization using monomers comprising ethylene and tetrafluoroethylene in a polymerization medium comprising water and a polymerization solvent A that is not compatible with water and that is at least one kind selected from the group consisting of compounds represented by the following Formulae 1 to 3, wherein the compatibility between solvent A and water is determined as described in the description, and
wherein a proportion of water to the polymerization medium is from 10% by volume to 80% by volume: 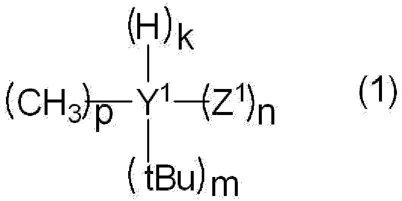 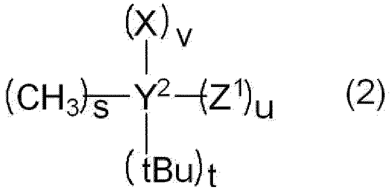 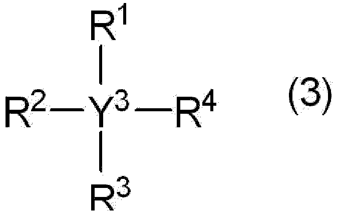
wherein, in Formula 1, Y¹ represents a nitrogen atom or an oxygen atom,
in a case in which Y¹ is a nitrogen atom, each of p, m, n, and k is independently an integer satisfying p + m ≥ 1 and p + m + n + k = 3,
in a case in which Y¹ is an oxygen atom, k is 0, and each of p, m, n, and k is independently an integer satisfying p + m ≥ 1 and p + m + n = 2,
in a case in which p is 1 or more, n is 1 or more,
in Formula 2, Y² represents a carbon atom, a silicon atom, a phosphorus atom, or a sulfur atom,
in a case in which Y² is a carbon atom or a silicon atom, each of s, t, u, and v is independently an integer satisfying s + t ≥ 1 and s + t + u + v = 4,
in a case in which Y² is a phosphorus atom, each of s, t, u, and v is independently an integer satisfying s + t ≥ 1 and s + t + u + v = 3,
in a case in which Y² is a sulfur atom, each of s, t, u, and v is independently an integer satisfying s + t ≥ 1 and s + t + u + v = 2,
in a case in which s is 1 or more, u is 1 or more,
each X independently represents a chlorine atom or a bromine atom,
in Formulae 1 and 2, each Z¹ is independently a group represented by any one of the following Formulae T1 to T6,
in Formula 3, Y³ represents a carbon atom or a silicon atom, and
each of R¹ to R⁴ independently represents a methyl group, a tert-butyl group, or a tert-butoxy group, 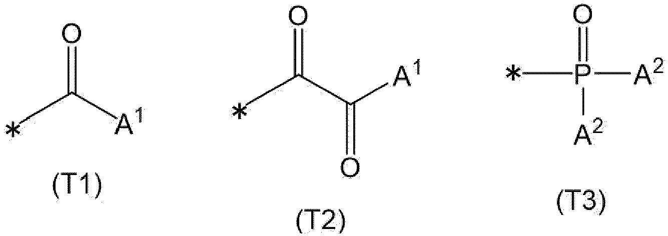 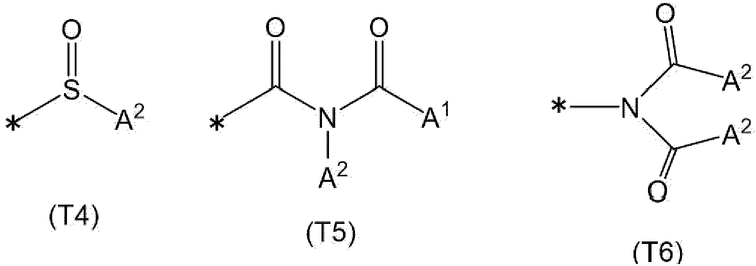
wherein, in Formulae T1 to T6, each A¹ independently represents a hydrogen atom, a methyl group, a tert-butyl group, -OR, or -NR₂, each A² independently represents a methyl group, a tert-butyl group, -OR, or -NR₂, each R independently represents a methyl group or a tert-butyl group, and * represents a binding site.

2. The method of producing a fluorine-containing copolymer according to claim 1, wherein, in Formula 2, Y² represents a carbon atom, a silicon atom, or a sulfur atom.

3. The method of producing a fluorine-containing copolymer according to claim 1, wherein, in Formula 2, Y² represents a carbon atom or a silicon atom.

4. The method of producing a fluorine-containing copolymer according to any one of claims 1 to 3, wherein, in Formula 2, X represents a chlorine atom.

5. The method of producing a fluorine-containing copolymer according to any one of claims 1 to 4, wherein, in Formulae T1 to T6, each A¹ independently represents a methyl group, a tert-butyl group, -OR, or -NR₂, each A² independently represents a methyl group, a tert-butyl group, -OR, or -NR₂, and each R independently represents a methyl group or a tert-butyl group.

6. The method of producing a fluorine-containing copolymer according to any one of claims 1 to 5, wherein, in Formulae 1 and 2, each Z¹ is independently a group represented by any one of Formulae T1 to T3.

7. The method of producing a fluorine-containing copolymer according to any one of claims 1 to 6, wherein, in Formulae 1 and 2, each Z¹ is independently a group represented by Formula T1.

8. The method of producing a fluorine-containing copolymer according to any one of claims 1 to 7, wherein in Formula 3, Y³ represents a carbon atom.

9. The method of producing a fluorine-containing copolymer according to any one of claims 1 to 8, wherein 0.5 ≤ Mₛₒₗ × S/Mₘₒₙ ≤ 1.0 is satisfied in a case in which a substance amount (mol) of polymerization solvent A is Mₛₒₗ, a total solubility (mol/mol) of the ethylene and the tetrafluoroethylene with respect to the polymerization solvent A is S, and a total substance amount (mol) of the ethylene and the tetrafluoroethylene, dissolved in the polymerization solvent excluding the water, is Mₘₒₙ, in any stage during polymerization, wherein S is determined according to the method defined in the description.

## Patentansprüche

1. Verfahren zur Herstellung eines fluorhaltigen Copolymers, wobei das Verfahren das Durchführen einer Suspensionspolymerisation unter Verwendung von Monomeren, umfassend Ethylen und Tetrafluorethylen, in einem Polymerisationsmedium umfasst, das Wasser und ein Polymerisationslösungsmittel A umfasst, das mit Wasser nicht kompatibel ist und das mindestens eine Art, ausgewählt aus der Gruppe, bestehend aus durch die folgenden Formeln 1 bis 3 dargestellten Verbindungen, ist, wobei die Kompatibilität zwischen Lösungsmittel A und Wasser wie in der Beschreibung angegeben bestimmt wird, und
wobei ein Anteil an Wasser am Polymerisationsmedium zwischen 10 Vol.-% und 80 Vol.-% beträgt: 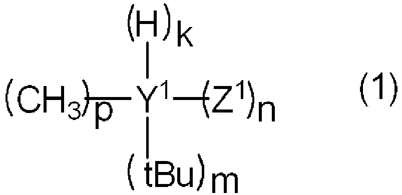 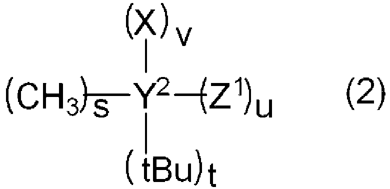 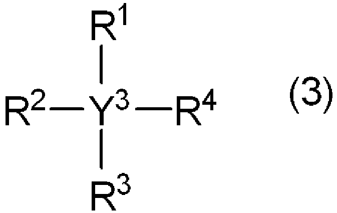
wobei in Formel 1 Y¹ ein Stickstoffatom oder ein Sauerstoffatom darstellt,
in einem Fall, in dem Y¹ ein Stickstoffatom ist, p, m, n und k jeweils unabhängig eine ganze Zahl sind, die p + m ≥ 1 und p + m + n + k = 3 erfüllen,
in einem Fall, in dem Y¹ ein Sauerstoffatom ist, k 0 beträgt und p, m, n und k jeweils unabhängig eine ganze Zahl sind, die p + m ≥ 1 und p + m + n = 2 erfüllen,
in einem Fall, in dem p 1 oder größer beträgt, n 1 oder größer beträgt,
in Formel 2 Y² ein Kohlenstoffatom, ein Siliziumatom, ein Phosphoratom oder ein Schwefelatom darstellt,
in einem Fall, in dem Y² ein Kohlenstoffatom oder ein Siliziumatom ist, s, t, u und v jeweils unabhängig eine ganze Zahl sind, die s + t ≥ 1 und s + t + u + v = 4 erfüllen,
in einem Fall, in dem Y² ein Phosphoratom ist, s, t, u und v jeweils unabhängig eine ganze Zahl sind, die s + t ≥ 1 und s + t + u + v = 3 erfüllen,
in einem Fall, in dem Y² ein Schwefelatom ist, s, t, u und v jeweils unabhängig eine ganze Zahl sind, die s + t ≥ 1 und s + t + u + v = 2 erfüllen,
in einem Fall, in dem s 1 oder größer beträgt, u 1 oder größer beträgt,
X jeweils unabhängig ein Chloratom oder ein Bromatom darstellt,
in Formeln 1 und 2 Z¹ jeweils unabhängig eine durch eine der folgenden Formeln T1 bis T6 dargestellt Gruppe ist,
in Formel 3 Y³ ein Kohlenstoffatom oder ein Siliziumatom darstellt, und
R¹ bis R⁴ jeweils unabhängig eine Methylgruppe, eine tert-Butylgruppe oder eine tert-Butoxygruppe darstellen, 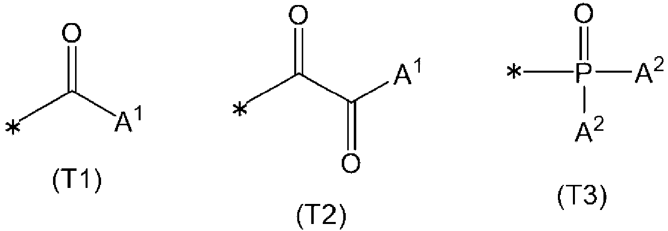 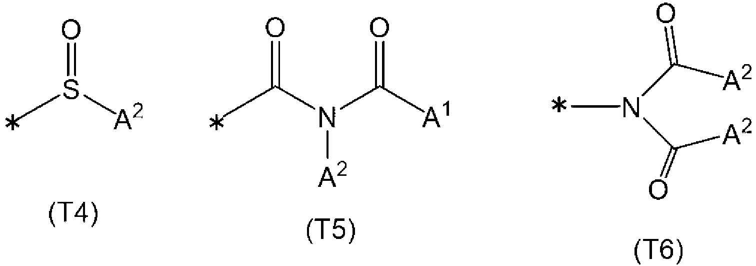
wobei in Formeln T1 bis T6 A¹ jeweils unabhängig ein Wasserstoffatom, eine Methylgruppe, eine tert-Butylgruppe, -OR oder -NR₂ darstellt, A² jeweils unabhängig eine Methylgruppe, eine tert-Butylgruppe, -OR oder -NR₂ darstellt, R jeweils unabhängig eine Methylgruppe oder eine tert-Butylgruppe darstellt und * eine Bindungsstelle darstellt.

2. Verfahren zur Herstellung eines fluorhaltigen Copolymers nach Anspruch 1, wobei in Formel 2 Y² ein Kohlenstoffatom, ein Siliziumatom oder ein Schwefelatom darstellt.

3. Verfahren zur Herstellung eines fluorhaltigen Copolymers nach Anspruch 1, wobei in Formel 2 Y² ein Kohlenstoffatom oder ein Siliziumatom darstellt.

4. Verfahren zur Herstellung eines fluorhaltigen Copolymers nach einem der Ansprüche 1 bis 3, wobei in Formel 2 X ein Chloratom darstellt.

5. Verfahren zur Herstellung eines fluorhaltigen Copolymers nach einem der Ansprüche 1 bis 4, wobei in Formeln T1 bis T6 A¹ jeweils unabhängig eine Methylgruppe, eine tert-Butylgruppe, -OR oder -NR₂ darstellt, A² jeweils unabhängig eine Methylgruppe, eine tert-Butylgruppe, -OR oder -NR₂ darstellt und R jeweils unabhängig eine Methylgruppe oder eine tert-Butylgruppe darstellt.

6. Verfahren zur Herstellung eines fluorhaltigen Copolymers nach einem der Ansprüche 1 bis 5, wobei in den Formeln 1 und 2 Z¹ jeweils unabhängig eine durch eine der Formeln T1 bis T3 dargestellte Gruppe ist.

7. Verfahren zur Herstellung eines fluorhaltigen Copolymers nach einem der Ansprüche 1 bis 6, wobei in Formeln 1 und 2 Z¹ jeweils unabhängig eine durch die Formel T1 dargestellte Gruppe ist.

8. Verfahren zur Herstellung eines fluorhaltigen Copolymers nach einem der Ansprüche 1 bis 7, wobei in Formel 3 Y³ ein Kohlenstoffatom darstellt.

9. Verfahren zur Herstellung eines fluorhaltigen Copolymers nach einem der Ansprüche 1 bis 8, wobei 0,5 ≤ Mₛₒₗ × S/Mₘₒₙ ≤ 1,0,
in einem Fall, in dem eine Stoffmenge (mol) des Polymerisationslösungsmittels A Mₛₒₗ ist, eine Gesamtlöslichkeit (mol/mol) von dem Ethylen und dem Tetrafluorethylen in Bezug auf das Polymerisationslösungsmittel A S ist und eine Gesamtstoffmenge (mol) an dem Ethylen und dem Tetrafluorethylen, gelöst in dem Polymerisationslösungsmittel, ausgenommen das Wasser, Mₘₒₙ ist, in jeder Phase während der Polymerisation erfüllt ist, wobei S gemäß dem in der Beschreibung definierten Verfahren bestimmt wird.

## Revendications

1. Procédé de production d'un copolymère contenant du fluor, le procédé comprenant réaliser une polymérisation en suspension en utilisant des monomères comprenant de l'éthylène et du tétrafluoroéthylène dans un milieu de polymérisation comprenant de l'eau et un solvant de polymérisation A qui n'est pas compatible avec l'eau et qui est au moins un type sélectionné parmi le groupe constitué de composés représentés par les Formules 1 à 3 suivantes, dans lequel la compatibilité entre le solvant A et l'eau est déterminée tel que décrit dans la description, et
dans lequel une proportion d'eau sur le milieu de polymérisation va de 10 % en volume à 80 % en volume : 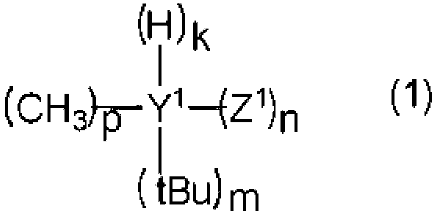 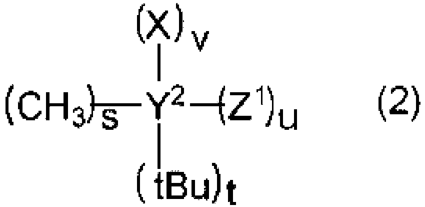 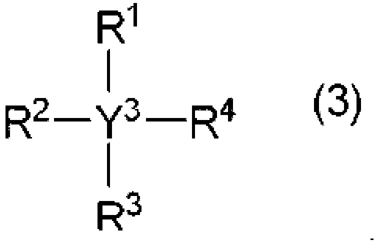
dans lesquelles, dans la Formule 1, Y¹ représente un atome d'azote ou un atome d'oxygène,
dans un cas où Y¹ est un atome d'azote, chacun de p, m, n et k est indépendamment un entier satisfaisant p + m ≥ 1 et p + m + n + k = 3,
dans un cas où Y¹ est un atome d'oxygène, k est 0, et chacun de p, m, n et k est indépendamment un entier satisfaisant p + m ≥ 1 et p + m + n = 2,
dans un cas où p est 1 ou plus, n est 1 ou plus,
dans la Formule 2, Y² représente un atome de carbone, un atome de silicium, un atome de phosphore ou un atome de soufre,
dans un cas où Y² est un atome de carbone ou un atome de silicium, chacun de s, t, u et v est indépendamment un entier satisfaisant s + t ≥ 1 et s + t + u + v = 4,
dans un cas où Y² est un atome de phosphore, chacun de s, t, u et v est indépendamment un entier satisfaisant s + t ≥ 1 et s + t + u + v = 3,
dans un cas où Y² est un atome de soufre, chacun de s, t, u et v est indépendamment un entier satisfaisant s + t ≥ 1 et s + t + u + v = 2,
dans un cas où s est 1 ou plus, u est 1 ou plus,
chaque X représente indépendamment un atome de chlore ou un atome de brome,
dans les Formules 1 et 2, chaque Z¹ est indépendamment un groupe représenté par l'une quelconque des Formules T1 à T6 suivantes,
dans la Formule 3, Y³ représente un atome de carbone ou un atome de silicium, et
chacun de R¹ à R⁴ représente indépendamment un groupe méthyle, un groupe tert-butyle ou un groupe tert-butoxy, 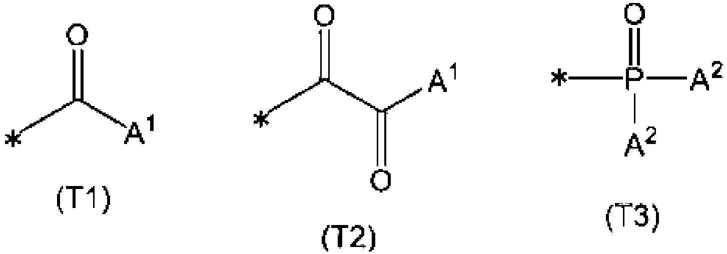 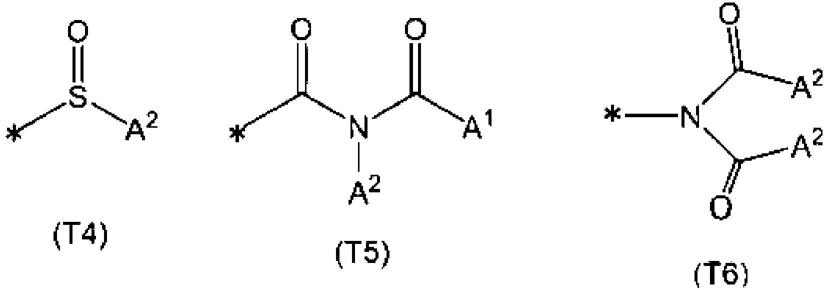
dans lesquelles, dans les Formules T1 à T6, chaque A¹ représente indépendamment un atome d'hydrogène, un groupe méthyle, un groupe tert-butyle, -OR ou -NR₂, chaque A² représente indépendamment un groupe méthyle, un groupe tert-butyle, -OR ou -NR₂, chaque R représente indépendamment un groupe méthyle ou un groupe tert-butyle, et * représente un site de liaison.

2. Procédé de production d'un copolymère contenant du fluor selon la revendication 1, dans lequel, dans la Formule 2, Y² représente un atome de carbone, un atome de silicium ou un atome de soufre.

3. Procédé de production d'un copolymère contenant du fluor selon la revendication 1, dans lequel, dans la Formule 2, Y² représente un atome de carbone ou un atome de silicium.

4. Procédé de production d'un copolymère contenant du fluor selon l'une quelconque des revendications 1 à 3, dans lequel, dans la Formule 2, X représente un atome de chlore.

5. Procédé de production d'un copolymère contenant du fluor selon l'une quelconque des revendications 1 à 4, dans lequel, dans les Formules T1 à T6, chaque A¹ représente indépendamment un groupe méthyle, un groupe tert-butyle, -OR ou -NR₂, chaque A² représente indépendamment un groupe méthyle, un groupe tert-butyle, -OR ou -NR₂, et chaque R représente indépendamment un groupe méthyle ou un groupe tert-butyle.

6. Procédé de production d'un copolymère contenant du fluor selon l'une quelconque des revendications 1 à 5, dans lequel, dans les Formules 1 et 2, chaque Z¹ est indépendamment un groupe représenté par l'une quelconque des Formules T1 à T3.

7. Procédé de production d'un copolymère contenant du fluor selon l'une quelconque des revendications 1 à 6, dans lequel, dans les Formules 1 et 2, chaque Z¹ est indépendamment un groupe représenté par la Formule T1.

8. Procédé de production d'un copolymère contenant du fluor selon l'une quelconque des revendications 1 à 7, dans lequel, dans la Formule 3, Y³ représente un atome de carbone.

9. Procédé de production d'un copolymère contenant du fluor selon l'une quelconque des revendications 1 à 8, dans lequel 0,5 ≤ Mₛₒₗ x S/Mₘₒₙ ≤ 1,0 est satisfaite dans un cas où une quantité de substance (mol) de solvant de polymérisation A est Mₛₒₗ, une solubilité totale (mol/mol) de l'éthylène et du tétrafluoroéthylène par rapport au solvant de polymérisation A est S, et une quantité de substance totale (mol) de l'éthylène et du tétrafluoroéthylène, dissouts dans le solvant de polymérisation excluant l'eau, est Mₘₒₙ, à toute étape au cours de la polymérisation, dans lequel S est déterminé conformément au procédé défini dans la description.
